(19) **Europäisches Patentamt / European Patent Office / Office européen des brevets**

(11) **EP 4 446 361 A1**

(12) **EUROPEAN PATENT APPLICATION**
published in accordance with Art. 153(4) EPC

(43) Date of publication:
**16.10.2024 Bulletin 2024/42**

(21) Application number: **22904672.7**

(22) Date of filing: **07.12.2022**

(51) International Patent Classification (IPC):
*C08G 73/10* (2006.01)    *C08K 7/14* (2006.01)
*C08J 5/04* (2006.01)

(52) Cooperative Patent Classification (CPC):
**C08G 73/10; C08J 5/04; C08K 7/14**

(86) International application number:
**PCT/KR2022/019855**

(87) International publication number:
**WO 2023/106843 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2021 KR 20210174321**

(71) Applicant: **PI Advanced Materials Co., Ltd. Chungcheongbuk-do 27818 (KR)**

(72) Inventors:
• **YANG, Min Seok**
  **Jincheon-gun Chungcheongbuk-do 27818 (KR)**
• **LEE, Ik Sang**
  **Jincheon-gun Chungcheongbuk-do 27818 (KR)**
• **LEE, Ho Sung**
  **Jincheon-gun Chungcheongbuk-do 27818 (KR)**

(74) Representative: **Eisenführ Speiser Patentanwälte Rechtsanwälte PartGmbB Postfach 10 60 78 28060 Bremen (DE)**

(54) **HIGH-HEAT-RESISTANT AND CHEMICAL-RESISTANT POLYIMIDE POWDER USING GLASS FIBER POWDER, AND PREPARATION METHOD THEREFOR**

(57)    The present invention relates to a polyimide powder and a preparation method therefor, and according to the present invention, a diamine monomer and a dianhydride monomer are polymerized using a glass fiber powder, and thus a high-heat-resistant polyimide powder capable of ensuring stability at a high temperature of 800°C while maintaining insulation, and having excellent chemical resistance can be provided.

**EP 4 446 361 A1**

**Description**

[Technical field]

The present invention relates to a highly heat-resistant and chemical-resistant polyimide powder and a preparation method thereof using a glass fiber powder.

[Background Art]

In general, a polyimide (PI) is a polymer of imide monomers, which is formed by solution polymerization of a dianhydride and a diamine or diisocyanate, and has mechanical properties such as excellent strength, chemical resistance, weather resistance, and heat resistance, based on the chemical stability of an imide ring. In addition, polyimides are attracting attention as high-functional polymer materials applicable to a wide range of industrial fields such as electronics, communications, and optics due to their excellent electrical properties such as insulation and a low dielectric constant.

Meanwhile, conventional polyimide has excellent insulating and heat resistance properties, but has the problem of poor stability at a high temperature of about 800 °C. Also, in order to maintain the high temperature stability of the conventional polyimide powder, when ceramic materials among inorganic materials are used, there is a problem that processing is difficult, and when metal materials among inorganic materials are used, due to their low insulating properties, there is a problem that they are difficult to use as an insulating material.

Therefore, there is a need for research for a method of preparing highly heat-resistant polyimide powder that may secure stability at a high temperature of about 800 °C while maintaining insulation properties.

[Disclosure]

[Technical Problem]

The purpose of the present invention is to address the problems and technical challenges of the related art as described above.

The present invention provides a highly heat-resistant polyimide powder that may secure stability at a high temperature of about 800 °C while maintaining insulation properties, and a method of preparing the same.

The present invention also provides a chemically resistant polyimide powder that may secure stability against acids and/or bases, and a method of preparing the same.

[Technical Solution]

The present invention relates to a polyimide powder and a method of preparing the same.

The polyimide powder according to the present invention has a dianhydride monomer component and a diamine monomer component as polymerized units.

As described above, conventional polyimide has excellent insulating and heat resistance properties, but has the problem of poor stability or chemical resistance at a high temperature of about 800 °C. Also, to maintain the high temperature stability of the conventional polyimide powder, when ceramic materials among inorganic materials are used, there is a problem that processing is difficult, and when metal materials among inorganic materials are used, due to their low insulating properties, there is a problem that they are difficult to use as an insulating material.

The present invention may provide a highly heat-resistant polyimide powder that may secure stability at a high temperature of about 800 °C while maintaining insulation properties and may be a chemically resistant polyimide powder resistant to acids and alkalis, by polymerizing the dianhydride monomer component and the diamine monomer component using a glass fiber powder.

A method of preparing a polyimide powder according to one embodiment of the present invention includes preparing a polyamic acid solution by solution polymerizing a dianhydride monomer and a diamine monomer in an organic solvent including glass fibers; heating the polyamic acid solution to prepare a polyimide mixed solution; and filtering and drying a precipitate present in the mixed solution to obtain a polyimide powder.

Conventionally, a dianhydride monomer and a diamine monomer were dispersed in an aqueous solvent to prepare a dispersion, and then heat-treated to prepare a polyimide powder. However, when a dispersion is prepared and heat-treated by adding the glass fiber powder to an aqueous solvent as in the related art, there is a problem in that the glass fiber powder aggregates in the dispersion and the dispersibility deteriorates.

In a method of preparing a polyimide powder according to one embodiment of the present invention, since the dianhydride monomer, the diamine monomer, and the glass fiber are dispersed in a mixed organic solvent to form a polymerization solution (varnish), and then heat-treated to prepare a polyimide powder, the dispersibility of the glass fiber may be good.

In one embodiment, the shape of the glass fiber is not particularly limited, but may be used in the form of chopped strands or a powder obtained by powdering the same. In particular, considering dispersibility, the powder may have a diameter of 5 $\mu$m or more, 7 $\mu$m or more, or 9 $\mu$m or more, and in addition, a powder having a diameter of 18 $\mu$m or less, 15 $\mu$m or less, or 12 $\mu$m or less may be used.

In addition, the type of glass fiber is not particularly limited, but glass fibers with high acid resistance, base resistance, and electrical resistance may be used.

A content of the glass fiber included in the organic solvent may be, for example, 5 to 90 parts by weight, 6 to 70 parts by weight, 7 to 60 parts by weight, 8 to 55 parts by weight, or 10 to 50 parts by weight, based on 100 parts by weight of the total amount of the dianhydride monomer and diamine monomer. When the content of the glass fiber is too small, it is difficult to secure stability or chemical resistance at a high temperature of about 800 °C, and when the content is too large, mechanical properties such as tensile strength or elongation may decrease.

The organic solvent of the present invention may be a mixed solvent of an aprotic solvent and a protic solvent. The use of the mixed solvent has the advantage of excellent moldability and processability compared to the use of an aprotic solvent alone or a protic solvent alone.

Without being bound by theory, it is believed that in the case of the aprotic solvent, it acts as a kind of imidization catalyst, and in the case of the protic solvent, it plays a role in increasing a molecular weight.

The aprotic solvent may include, without limitation, one or more selected from the group consisting of toluene, xylene, naphtha, anisole, cresol, ethylbenzene, propylbenzene, chlorobenzene, dichlorobenzene, trichlorobenzene, biphenyl, terphenyl, diphenyl ether, diphenyl sulfide, and acetophenone, chlorinated biphenyl, and chlorinated diphenyl ether. The protic solvent may include, without limitation, one or more selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), 3-methoxy-N,N-dimethylpropanamide (KJCMPA), and gamma-butyrolactone (GBL).

The mixed solvent may include 10 to 90 wt% of the aprotic solvent and 10 to 90 wt% of the protic solvent, for example, 20 to 80 wt% of the aprotic solvent and 20 to 80 wt% of the protic solvent. When the content of the aprotic solvent is too small, imidization is not sufficiently achieved in a heating process, which has the disadvantage of not ensuring moldability and lowering the intrinsic viscosity (IV), and when the content is too large, the molecular weight of the polymerization solution is formed too late (chains are too small), which has the disadvantage that moldability cannot be secured when forming molded products later.

The preparing of the polyamic acid solution may be performed at 50 to 100 °C, for example, 60 to 90 °C, 65 to 85 °C, or 70 to 80 °C, and the preparing of the polyimide mixed solution may be performed at 160 to 200 °C, for example, 170 to 190 °C or 175 to 185 °C.

When the heating temperature is lower than the above range, mechanical properties such as elongation and tensile strength may decrease and fracture may occur during molding processing, resulting in lower yield and lower processability. In addition, when the heating temperature is higher than the above range, the color of the powder may darken and the particle size may increase.

The preparing of the polyamic acid solution and/or preparing of the polyimide mixed solution may be performed under pressurized conditions, for example, 1 to 10 bar. In particular, in one embodiment of the present invention, since the dianhydride monomer, the diamine monomer, and the glass fiber powder are dispersed in a mixed solvent for polymerization, the polymerization reaction may be performed under normal pressure or pressurized conditions of 1 to 3 bar or less. Pressurization may be done by injecting an inert gas into the reactor or using water vapor generated inside the reactor. The inert gas may be nitrogen, argon, helium, or neon.

When the pressurized conditions are lower than the above range, mechanical properties such as elongation and tensile strength may decrease and fracture may occur during molding processing, resulting in lower yield and lower processability. In addition, when the pressurized conditions are higher than the above range, the color of the powder may darken and the particle size may increase.

The reaction time of preparing the polyamic acid solution and/or preparing the polyimide mixed solution may be 1 to 20 hours, for example, 1 to 10 hours, 1 to 8 hours, 1 to 6 hours, or 1 to 4 hours.

When the reaction time is lower than the above range, the reaction yield decreases, mechanical properties such as elongation and tensile strength may decrease and fracture may occur during molding processing, resulting in lower yield and lower processability. In addition, when the reaction time is higher than the above range, the color of the powder may darken and the particle size may increase.

The obtaining of the polyimide powder is filtering and drying a precipitate present in the mixed solution to obtain a polyimide powder.

The filtering and drying method is not particularly limited, and for example, vacuum drying or oven drying may be used.

The dianhydride monomer is not particularly limited as long as it can react with the diamine monomer to form polyimide. For example, the dianhydride monomer according to the present invention may include at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

The diamine monomer is not particularly limited as long as it can react with the dianhydride monomer to form polyimide. For example, the diamine monomer according to the present invention may include at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis (4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

At this time, the molar ratio (b/a), which represents the number of moles (b) of the diamine monomer component to the number of moles (a) of the dianhydride monomer component, is 1 or less. For example, the upper limit of the molar ratio (b/a) of the diamine monomer component to the dianhydride monomer component may be 0.99 or less, 0.98 or less, 0.97 or less, 0.96 or less, or 0.95 or less, the lower limit of the molar ratio may be 0.9 or more, 0.91 or more, 0.92 or more, 0.93 or more, or 0.94 or more, and specifically, the molar ratio of the diamine monomer component to the dianhydride monomer component may be 0.9 to 0.99, 0.93 to 0.99, 0.94 to 0.99, 0.95 to 0.99, 0.95 to 0.98, or 0.96 to 0.98.

For example, the present invention uses fewer moles of the diamine monomer component than the number of moles of the dianhydride monomer component. Stoichiometrically, polyimide can be produced by a 1:1 reaction of the dianhydride monomer and the diamine monomer, but because the reaction proceeds mainly in the presence of a solvent and/or catalyst and at this time, a side reaction between the functional group of the solvent or catalyst and the diamine may proceed, generally, diamine is added in excess or dianhydride and diamine are added in equal molar numbers.

The solid content in the mixed solvent may be 1 to 30% by weight. The solid content may refer to the dianhydride monomer component and the diamine monomer component. For example, the solid content in the mixed solvent may be 1 to 20% or 10 to 20%. By having the above solid content, the intrinsic viscosity of the polyimide powder may be adjusted to have appropriate processability.

In particular, in the method of preparing a polyimide powder according to one embodiment of the present invention, since the dianhydride monomer component, the diamine monomer component, and the glass fiber powder are dispersed in a mixed solvent to form a polymerization solution (varnish), the intrinsic viscosity of the polyimide powder is higher (> 0.9 dL/g) compared to the conventional water-based polymerization method, resulting in excellent moldability and processability.

The polyimide powder according to another embodiment of the present invention includes a polyimide matrix having polymerized units derived from the dianhydride monomer and the diamine monomer, and glass fibers dispersed in the polyimide matrix, and satisfies one or more of the following conditions:

a) a weight loss rate measured after leaving at 800 °C for 25 hours is 35% or less, and surface resistance is $10^{14}$ $\Omega/cm^2$ or more;

b) a weight loss rate measured after immersion in an acidic aqueous solution with a pH of 5 or less for 168 hours is 2.6% or less; or

c) a weight loss rate measured after immersion in an alkaline aqueous solution with a pH of 9 or more for 168 hours is 15% or less.

The glass fiber powder may be included in an amount of 0.01 to 90 parts by weight, preferably 0.1 to 50 parts by weight, based on 100 parts by weight of the polyimide powder. The glass fiber powder may be included during polymerization of the polyimide powder, or additionally, may be mixed with the polyimide powder.

The polyimide powder may have a weight loss rate of 35% or less, for example, 34% or less, 33% or less, 10 to 35%, 15 to 34%, or 18% to 32%, as measured after being left at 800 °C for 25 hours. When the weight loss rate is more than 35%, high-temperature heat resistance may be insufficient.

The polyimide powder may have a surface resistance of $10^{14}$ $\Omega/cm^2$ or more as measured according to ASTM D257. For example, the polyimide powder according to the present invention may have a lower limit of surface resistance that is $10^{14}$ $\Omega/cm^2$ or more and an upper limit of surface resistance that is $10^{15}$ $\Omega/cm^2$ or less, as measured according to ASTM D257. When the surface resistance is less than $10^{14}$ $\Omega/cm^2$, insulation properties may be insufficient.

The polyimide powder may have a weight loss rate of 2.6% or less, for example 2.5% or less, 0.5 to 2.6%, or 1 to 2.5%, as measured after immersion for 168 hours in an acidic aqueous solution with a pH of 5 or less. The acidic aqueous solution with a pH of 5 or less is not particularly limited, but for example, a 45 to 55 wt% aqueous hydrofluoric acid solution may be used. The measurement temperature or pressure is not particularly limited, but measurement may be performed at room temperature or atmospheric pressure.

The polyimide powder may have a weight loss rate of 15% or less, for example 13% or less, 1 to 11%, or 2 to 10%, as measured after immersion for 168 hours in an alkaline aqueous solution with a pH of 9 or more. The alkaline aqueous solution with a pH of 5 or more is not particularly limited, but for example, a 20 to 30 wt% ammonia aqueous solution may be used. The measurement temperature or pressure is not particularly limited, but measurement may be performed at room temperature or atmospheric pressure.

The dianhydride monomer of the polyimide powder may include at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

The diamine monomer of the polyimide powder may include at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis (4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

In addition, the present invention provides a method of manufacturing a polyimide molded article, including pressure molding the above-described polyimide powder.

The pressure molding may be performed at a pressure of 30 to 1000 MPa, and the pressure molding may be performed at a temperature of 200 to 500 °C. In addition, the pressure molding may be performed at room temperature and may further include sintering the pressure molded polyimide powder at 200 to 500 °C. When the pressure is lower than the above range, the moldability of the powder may be insufficient during molding, and when it is higher than the above range, the processability of the molded article may be reduced. When the temperature is lower than the above range, the fluidity of the molecules may not be secured and moldability may be greatly reduced, and when it is higher than the above temperature range, some parts may be oxidized due to overheating.

The present invention also provides a molded article manufactured using the polyimide powder. The polyimide powder prepared according to the present invention may be manufactured into molded articles by various molding methods, for example, compression molding, injection molding, slush molding, blow molding, extrusion molding, or spinning methods. The form of the molded article is not limited, but may be a film, a sheet, a pellet, a tube, a belt, an injection molded article, or an extrusion molded article.

The polyimide powder prepared according to the present invention may be used in various fields such as electrical/electronics, semiconductors, displays, automobiles, medicine, batteries, and aerospace.

[Advantageous Effects]

According to the present application, it is possible to prepare a highly heat-resistant polyimide powder that can secure stability at a high temperature of about 800 °C while maintaining insulation properties.

The polyimide powder according to the present application can increase the surface resistance of the molded article to $10^{14}$ $\Omega/cm^2$ or more, making it possible to maintain insulation.

In addition, the polyimide powder according to the present application can secure stability at a high temperature of about 800 °C while maintaining insulation properties unlike other fillers, by including glass fiber powder as filler.

In addition, the polyimide powder according to the present application has a mass change rate of 1.0% to 2.6% as measured when immersed in a hydrofluoric acid solution and a mass change rate of 2.0% to 10.0% as measured when immersed in ammonia water, and has excellent chemical resistance compared to conventional polyimide powder.

However, effects of the present invention are not limited to the effects mentioned above, and other effects not mentioned will be clearly understood by those skilled in the art from the description below.

[Modes of the Invention]

Hereinafter, the present invention will be described in more detail through examples according to the present invention and comparative examples not according to the present invention, but the scope of the present invention is not limited by the examples presented below.

**Example 1**

900 g of a mixed solvent of 30 wt% m-xylene and 70 wt% N-methylpyrrolidone (NMP), 46 g of ODA, 10 g of a glass fiber powder, 40 g of PMDA, and 14 g of ODPA were sequentially input to a glass reactor and stirred at 75 °C for 2 hours to prepare a polyamic acid solution. The completed polyamic acid solution was heated to 180 °C for 2 hours at atmospheric pressure to prepare a polyimide mixed solution. The powder precipitated in the mixed solution was filtered, washed with ethanol, and dried for 24 hours to prepare a polyimide powder. The prepared powder was pressure-molded at >50MPa and >300 °C to prepare a molded article.

**Example 2**

A molded article was manufactured in the same manner as Example 1, except that 15 g of a glass fiber powder was used.

**Example 3**

A molded article was manufactured in the same manner as Example 1, except that 20 g of a glass fiber powder was used.

**Example 4**

A molded article was manufactured in the same manner as Example 1, except that 30 g of a glass fiber powder was used.

**Example 5**

A molded article was manufactured in the same manner as Example 1, except that 40 g of a glass fiber powder was used.

**Example 6**

A molded article was manufactured in the same manner as Example 1, except that 50 g of a glass fiber powder was used.

**Comparative Examples 1 to 5**

Polyimide powder was prepared in the same manner as in Example 1, except that the filler components were different, as shown in Table 1 below.

Specifically, Comparative Example 1 is a case in which no filler was added, and Comparative Examples 2 to 5 are a case in which fillers of various components, which are conventionally input, were added.

Experimental Examples

The physical properties of the prepared polyimide powder were measured using the following methods, and the results are shown in Table 1 below.

**Experimental Example 1 - Weight loss rate measurement**

To analyze the weight loss rate, a compression molded specimen (5mm * 5mm * 5mm cube shape) of a polyimide powder was used, and the weight loss rate (%) at 800 °C was measured using a thermogravimetric analyzer (TGA). Specifically, the weight loss rate was compared after leaving the specimen at 800 °C for 25 hours under 0.61 Mpa air pressure.

$$\% \text{ weight loss} = (\text{initial weight - weight after exposure})/\text{initial weight} \times 100$$

**Experimental Example 2 - Surface resistance measurement**

To measure surface resistance, a compression molded specimen of a polyimide powder was used, and the surface resistance of Examples and Comparative Examples was measured according to the ASTM-D257 standard.

Specifically, surface resistance was measured under the conditions of 55% RH and 23 °C, and an applied voltage of 500V according to the ASTM-D257 measurement method, and the measurement equipment was a 4-point probe meter (CMT-SR 1000N, AIT).

[Table 1]

| Physical properties | Filler type | Filler content | Weight loss rate (~800 °C) | Surface resistance |
|---|---|---|---|---|
| Units | | g | % | $\Omega/cm^2$ |
| ASTM | | | - | D257 |
| Example 2 | Glass fiber powder | 15 | 31.5 | $10^{15}$ |
| Example 4 | Glass fiber powder | 30 | 27.8 | $10^{15}$ |
| Example 5 | Glass fiber powder | 40 | 25.4 | $10^{14}$ |
| Example 6 | Glass fiber powder | 50 | 18.1 | $10^{14}$ |
| Comparative Example 1 | - | - | 36.2 | $10^{15}$ |
| Comparative Example 2 | Graphite | 15 | 32.2 | $10^{12}$ |
| Comparative Example 3 | Graphite | 40 | 25.1 | $10^{8}$ |
| Comparative Example 4 | Zinc oxide | 30 | 24.8 | $10^{8}$ |
| Comparative Example 5 | Potassium titanate | 30 | 24.6 | $10^{12}$ |

Referring to Table 1, in the case of Examples 2, 4, 5, and 6, which are polyimide powders having a dianhydride monomer component and a diamine monomer component as polymerized units and further including a glass fiber powder as in the present invention, the surface resistance is $10^{14}$ $\Omega/cm^2$ or more and the weight loss rate (%) at 800 °C is 18.1% to 31.5%, indicating that stability may be secured at a high temperature of about 800 °C while maintaining insulation properties. In particular, in Example 6, when a content of the glass fiber powder was 50 wt%, the weight loss rate (%) at 800 °C was 18.1%, showing that the powder had excellent high heat resistance properties. For this reason, in the case of Examples 2, 4, 5, and 6 of the present invention, because the molded article has a resistance of $10^{14}$ $\Omega/cm^2$ or more and may have a reduced weight loss rate (%) at 800 °C, it can be seen that stability can be secured at a high temperature of about 800 °C while maintaining insulation properties.

On the other hand, when no filler is added (Comparative Example 1) or when a conventional filler is input (Comparative Examples 2 to 5), it can be seen that there is a problem that the surface resistance is lowered and the insulation properties are lowered, or the weight loss rate (%) at 800°C increases and high temperature stability decreases.

In addition, since the method of preparing a polyimide powder according to the present application is achieved by mixing glass fibers during in-situ polymerization, the dispersibility of the polyimide powder is excellent and the glass fibers act as a seed, enabling more uniform powder preparation.

In addition, since the polyimide powder according to the present application includes aromatic chains and further includes a glass fiber powder as a filler, it may have better heat resistance than conventional polyimide powder.

**Experimental Example 2 - Chemical resistance (weight loss rate) measurement**

For chemical resistance analysis, polyimide molded articles were processed into cube-shaped specimens of 5mm * 5mm * 5mm. The cubic specimen was immersed in a 49% hydrofluoric acid solution for 168 hours. After immersion, the change in appearance and weight loss rate were measured.

In the same way, the cube-shaped specimen was immersed in 25-28% ammonia water for 168 hours, and the change in appearance and weight loss rate before and after immersion were measured.

[Table 2]

| Physical properties | Filler type | Filler content | Weight loss rate (hydrofluoric acid) | Weight loss rate (ammonia water) |
|---|---|---|---|---|
| Units | | g | % | % |
| Example 1 | Glass fiber | 10 | 2.4 | 8.7 |

(continued)

| Physical properties | Filler type | Filler content | Weight loss rate (hydrofluoric acid) | Weight loss rate (ammonia water) |
|---|---|---|---|---|
| Units | | g | % | % |
| | powder | | | |
| Example 3 | Glass fiber powder | 20 | 2.0 | 7.1 |
| Example 4 | Glass fiber powder | 30 | 1.4 | 4.4 |
| Example 6 | Glass fiber powder | 50 | 1.2 | 2.1 |
| Comparative Example 1 | - | - | 2.8 | 27.8 |

Referring to Table 2, in the case of Examples 1, 3, 4, and 6, which include a glass fiber powder dispersed in a polyimide matrix having polymerized units derived from a dianhydride monomer and a diamine monomer as in the present invention, it was found that the weight loss rate measured when immersed in a hydrofluoric acid solution is 1.0% to 2.6%, and the weight loss rate measured when immersed in an aqueous ammonia solution is 2.0% to 10.0%, indicating excellent chemical resistance.

On the other hand, in the case where filler was not added (Comparative Example 1), it was found that the weight loss rate measured when immersed in the hydrofluoric acid solution and the aqueous ammonia was high, indicating low chemical resistance.

Table 3 below shows experimental results comparing intrinsic viscosity (IV), formability, and processability according to Examples using a mixed solvent of the aprotic solvent and the protic solvent according to one embodiment of the present invention and Comparative Examples using the aprotic solvent alone or the protic solvent alone.

Specifically, Comparative Example 6 shows a case where m-cresol was used alone, and Comparative Example 7 was the same as Example 1 except that NMP was used alone. In addition, Example 7 shows a case of a 50/50 wt% mixed solution of m-cresol/NMP, Example 8 shows a case of a 30/70 wt% mixed solution of m-cresol/NMP, and Example 9 is the same as Example 1 except that it shows a case of a 30/70 wt% mixed solution of m-cresol/NMP.

[Table 3]

| Solvent | Comparative Example 6 | Comparative Example 7 | Example 7 | Example 8 | Example 9 |
|---|---|---|---|---|---|
| Intrinsic viscosity (IV) | 0.95 | 0.65 | 1.28 | 0.9 | 1.18 |
| Formability | X | X | O | O | O |
| Processability | X | X | O | O | O |

As shown in Table 3, in the case of Comparative Examples 6 and 7 in which only the protic solvent or the aprotic solvent was used, it can be seen that the intrinsic viscosity (IV) was low and it was difficult to secure moldability and processability.

On the other hand, in the case of Examples 7 to 9 using a mixed solvent of the protic solvent and the aprotic solvent as in the embodiment of the present invention, it can be seen that the intrinsic viscosity (IV) is high and both moldability and processability are excellent.

The present invention described above is not limited to the above-described embodiments, as various substitutions and changes can be made by those skilled in the art without departing from the technical spirit of the present invention.

## Claims

1. A method of preparing a polyimide powder, comprising:

   preparing a polyamic acid solution by solution polymerizing a dianhydride monomer and a diamine monomer in an organic solvent including glass fibers;
   heating the polyamic acid solution to prepare a polyimide mixed solution; and
   filtering and drying a precipitate present in the mixed solution to obtain a polyimide powder.

2. The method of claim 1, wherein a content of the glass fiber included in the organic solvent is 5 to 90 parts by weight based on 100 parts by weight of the total amount of the dianhydride monomer and diamine monomer.

3. The method of claim 1, wherein the organic solvent is a mixed solvent of an aprotic solvent and a protic solvent.

4. The method of claim 3, wherein

the aprotic solvent is one or more selected from the group consisting of toluene, xylene, naphtha, anisole, cresol, ethylbenzene, propylbenzene, chlorobenzene, dichlorobenzene, trichlorobenzene, biphenyl, terphenyl, diphenyl ether, diphenyl sulfide, and acetophenone, chlorinated biphenyl, and chlorinated diphenyl ether, and
the protic solvent is one or more selected from the group consisting of N-methylpyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), 3-methoxy-N,N-dimethylpropanamide (KJCMPA), and gamma-butyrolactone (GBL).

5. The method of claim 3, wherein the mixed solvent includes 10 to 90 wt% of the aprotic solvent and 10 to 90 wt% of the protic solvent.

6. The method of claim 1, wherein the preparing of the polyamic acid solution is performed at 50 to 100 °C.

7. The method of claim 1, wherein the preparing of the polyimide mixed solution is performed at 140 to 200 °C.

8. The method of claim 1, wherein the dianhydride monomer includes at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

9. The method of claim 1, wherein the diamine monomer includes at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis (4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

10. A polyimide powder comprising:

a polyimide matrix having polymerized units derived from a dianhydride monomer and a diamine monomer; and
glass fibers dispersed in the polyimide matrix,
wherein one or more of the following conditions are satisfied:

a) a weight loss rate measured after leaving at 800 °C for 25 hours is 35% or less, and a surface resistance is $10^{14}$ $\Omega/cm^2$ or more;
b) a weight loss rate measured after immersion in an acidic aqueous solution with a pH of 5 or less for 168 hours is 2.6% or less; or
c) a weight loss rate measured after immersion in an alkaline aqueous solution with a pH of 9 or more for 168 hours is 15% or less.

11. The polyimide powder of claim 10, comprising 0.01 to 90 parts by weight of a glass fiber powder based on 100 parts by weight of the polyimide powder.

12. The polyimide powder of claim 10, wherein the dianhydride monomer includes at least one selected from the group consisting of pyromellitic dianhydride (PMDA), 3,3',4,4'-biphenyltetracarboxylic dianhydride (s-BPDA), 2,3,3',4'-biphenyltetracarboxylic dianhydride (a-BPDA), 3,3',4,4'-benzophenonetetracarboxylic dianhydride (BTDA), oxydiphthalic dianhydride (ODPA), 4,4-(hexafluoroisopropylidene)diphthalic anhydride (6-FDA), and p-phenylenebis(trimellitate anhydride) (TAHQ).

13. The polyimide powder of claim 10, wherein the diamine monomer includes at least one selected from the group consisting of 1,4-diaminobenzene (PPD), 1,3-diaminobenzene (MPD), 2,4-diaminotoluene, 2,6-diaminotoluene, 4,4'-diaminodiphenyl ether (ODA), 4,4'-methylenediamine (MDA), 4,4-diaminobenzanilide (4,4-DABA), N,N-bis (4-aminophenyl)benzene-1,4-dicarboxamide (BPTPA), 2,2-dimethylbenzidine (M-TOLIDINE), 2,2-bis(trifluoromethyl)benzidine (TFDB), 1,4-bisaminophenoxybenzene (TPE-Q), bisaminophenoxybenzene (TPE-R), 2,2-bisaminophenoxyphenylpropane (BAPP), and 2,2-bisaminophenoxyphenylhexafluoropropane (HFBAPP).

14. A method of manufacturing a polyimide molded article, comprising pressure molding the polyimide powder of claim 10.

15. The method of claim 14, wherein the pressure molding is performed at a pressure of 30 to 1,000 MPa.

16. The method of claim 14, wherein the pressure molding is performed at 200 to 500 °C.

17. The method of claim 14, further comprising sintering the pressure-molded polyimide powder at 200 to 500 °C.

18. A polyimide molded article manufactured by the manufacturing method of any one of claims 14 to 17.

**EP 4 446 361 A1**

| INTERNATIONAL SEARCH REPORT | International application No. |
| --- | --- |
| | **PCT/KR2022/019855** |

| A. CLASSIFICATION OF SUBJECT MATTER |
| --- |
| **C08G 73/10**(2006.01)i; **C08K 7/14**(2006.01)i; **C08J 5/04**(2006.01)i |
| According to International Patent Classification (IPC) or to both national classification and IPC |

| B. FIELDS SEARCHED |
| --- |
| Minimum documentation searched (classification system followed by classification symbols) |
| C08G 73/10(2006.01); B32B 15/08(2006.01); B32B 27/20(2006.01); C08J 5/24(2006.01); C09D 5/44(2006.01); G09F 9/30(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 유리섬유(glassfiber), 폴리이미드(polyimide), 용매(solvent), 디안하이드라이드 (dianhydride), 디아민(diamine) |

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 10-152558 A (JSR CORP.) 09 June 1998 (1998-06-09)<br>See paragraphs [0007], [0011] and [0015]-[0019]. | 1-18 |
| Y | KR 10-2015-0113927 A (NIPPON STEEL & SUMIKIN CHEMICAL CO., LTD.) 08 October 2015 (2015-10-08)<br>See paragraphs [0070] and [0072]. | 1-18 |
| A | KR 10-2021-0070335 A (KANEKA AMERICAS HOLDING, INC.) 14 June 2021 (2021-06-14)<br>See paragraphs [0053]-[0067]. | 1-18 |
| A | KR 10-2018-0044128 A (KOREA ELECTROTECHNOLOGY RESEARCH INSTITUTE) 02 May 2018 (2018-05-02)<br>See claims 1-10. | 1-18 |
| A | KR 10-1641210 B1 (LG CHEM, LTD.) 20 July 2016 (2016-07-20)<br>See paragraphs [0038]-[0048]. | 1-18 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 March 2023** | **24 March 2023** |
| Name and mailing address of the ISA/KR | Authorized officer |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/019855**

| Patent document cited in search report | | | Publication date (day/month/year) | Patent family member(s) | | | Publication date (day/month/year) |
|---|---|---|---|---|---|---|---|
| JP | 10-152558 | A | 09 June 1998 | JP | 10-152558 | A | 09 June 1998 |
| KR | 10-2015-0113927 | A | 08 October 2015 | CN | 104952781 | A | 30 September 2015 |
| | | | | JP | 2015-199350 | A | 12 November 2015 |
| | | | | TW | 201536555 | A | 01 October 2015 |
| KR | 10-2021-0070335 | A | 14 June 2021 | CN | 112888726 | A | 01 June 2021 |
| | | | | EP | 3841152 | A1 | 30 June 2021 |
| | | | | JP | 2022-502535 | A | 11 January 2022 |
| | | | | US | 2021-0340344 | A1 | 04 November 2021 |
| | | | | WO | 2020-072639 | A1 | 09 April 2020 |
| KR | 10-2018-0044128 | A | 02 May 2018 | WO | 2018-074738 | A1 | 26 April 2018 |
| KR | 10-1641210 | B1 | 20 July 2016 | KR | 10-2015-0028044 | A | 13 March 2015 |

Form PCT/ISA/210 (patent family annex) (July 2022)